(19) Europäisches Patentamt
European Patent Office
Office européen des brevets

(11) Veröffentlichungsnummer: **0 043 998**
**B1**

(12) # EUROPÄISCHE PATENTSCHRIFT

(45) Veröffentlichungstag der Patentschrift: **18.04.84**

(51) Int. Cl.³: **C 08 L 69/00**, C 08 K 5/00, C 08 G 63/62

(21) Anmeldenummer: **81105145.7**

(22) Anmeldetag: **02.07.81**

(54) **Stabilisatorlösungen, ihre Verwendung zur Stabilisierung von thermoplastischen Polycarbonaten sowie stabilisierte thermoplastische Polycarbonate.**

(30) Priorität: **12.07.80 DE 3026503**

(43) Veröffentlichungstag der Anmeldung: **20.01.82 Patentblatt 82/3**

(45) Bekanntmachung des Hinweises auf die Patenterteilung: **18.04.84 Patentblatt 84/16**

(84) Benannte Vertragsstaaten: **DE FR GB IT NL**

(56) Entgegenhaltungen:
**DE - A - 2 206 720**
**DE - A - 2 658 849**

**CHEMICAL ABSTRACTS, Band 77, Nr. 26, 25. Dezember 1972, Seite 38, Nr. 165584w Columbus, Ohio, U.S.A.**

(73) Patentinhaber: **BAYER AG, Konzernverwaltung RP Patentabteilung, D-5090 Leverkusen 1 Bayerwerk (DE)**

(72) Erfinder: **Eimers, Erich, Dr., Kreuzbergstrasse 136, D-4150 Krefeld (DE)**
Erfinder: **Dhein, Rolf, Dr., Deswatinesstrasse 30, D-4150 Krefeld (DE)**
Erfinder: **Cohnen, Wolfgang, Dr., Heymannstrasse 36, D-5090 Leverkusen 1 (DE)**
Erfinder: **Kühle, Engelbert, Dr., von-Bodelschwinghstrasse 42, D-5060 Bergisch Gladbach 2 (DE)**
Erfinder: **Heywang, Gerhard, Dr., Nittumer Weg 4, D-5060 Bergisch Gladbach 2 (DE)**

EP 0 043 998 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Stabilisatorlösungen, ihre Verwendung zur Stabilisierung von thermoplastischen Polycarbonaten sowie stabilisierte thermoplastische Polycarbonate

Gegenstand der vorliegenden Erfindung sind Lösungen von Phosphinen der Formel I,

$$(R)_2PR_1 \qquad (I)$$

worin

R ein unsubstituiertes oder substituiertes $C_6$ bis $C_{14}$ -Aryl ist, und

$R_1$=R oder ein unsubstituiertes oder substituiertes $C_1$ bis $C_{18}$ -Alkyl ist, in Oxetanverbindungen der Formel II

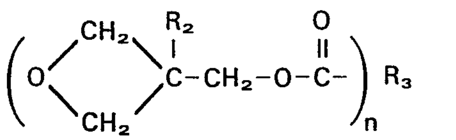

(II)

worin:

$R_2$=$C_1$ bis $C_{16}$ -Alkyl, und

$R_3$ entweder ein n-bindinges $C_2$ bis $C_8$ -Alkan, das noch durch OH-Gruppen substituiert sein kann, wobei n eine Zahl von 1 bis 6 ist oder ein 2bindiges Cycloalkan, wobei n=2 ist, sind, oder in Oxetanverbindungen der Formel III

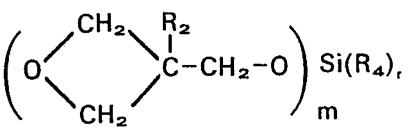

(III)

worin:

$R_2$=$C_1$ bis $C_{16}$ -Alkyl,

$R_4$=$C_1$ bis $C_4$ -Alkyl, das gegebenenfalls durch Cyan, Carboxy oder Acetoxy substituiert sein kann, Allyl, $C_6$ bis $C_{14}$ - Aryl, das gegebenenfalls alkylsubstituiert ist, $C_7$ bis $C_{14}$ -Aralkyl oder $C_1$ bis $C_4$-Alkoxy, das gegebenenfalls durch $C_1$ bis $C_4$-Alkoxy oder Allyloxy substituiert sein kann, m eine ganze Zahl von 1 bis 4 und r eine ganze Zahl von 0 bis 3, wobei m+r immer gleich 4 ist.

Die Reste R in den Verbindungen der Formel I können sowohl gleich als auch verschieden sein.

Die jeweiligen Komponenten der erfindungsgemässen Lösungen, also Phosphine und Oxetanverbindungen, sollen einen Siedepunkt von mindestens 200°C haben; die erfindungsgemässen Lösungen sollen ausserdem einen Fp. von max. 40°C haben.

Das Mischungsverhältnis von gelöstem Phosphin der Formel I und oxetangruppenhaltige Lösungsmittel der Formel II oder III liegt zwischen 3 und 10 Oxetangruppenäquivalenten des oxetangruppenhaltigen Lösungsmittels pro Atomäquivalent Phosphor des Phosphins, insbesondere zwischen 4 bis 8 Oxetangruppenäquivalenten des oxetangruppenhaltigen Lösungsmittels pro Atomäquivalent Phosphor des Phosphins.

Gegenstand der vorliegenden Erfindung ist ausserdem die Verwendung der erfindungsgemässen Stabilisatorlösungen zum Stabilisieren von Polycarbonat.

Gegenstand der vorliegenden Erfindung ist ausserdem ein Verfahren zum Stabilisieren von thermoplastischen Polycarbonaten, das dadurch gekennzeichnet ist, dass man die erfindungsgemässen Stabilisatorlösungen während oder nach der Herstellung des thermoplastischen Polycarbonats diesem in bekannter Weise hinzufügt.

Gegenstand der vorliegenden Erfindung sind ausserdem stabilisierte thermoplastische Polycarbonate, die durch den Zusatz der erfindungsgemässen Lösungen in Mengen von 0,02 bis 1 Gew.-%, bezogen auf Gesamtgewicht an thermoplastischem Polycarbonat- und Stabilisatorlösung, stabilisiert worden sind.

Die erfindungsgemässe Stabilisierung der Polycarbonate bewirkt eine Stabilisierung gegen den Einfluss von Wärme und/oder Sauerstoff.

Die Stabilisierung von Polycarbonaten mit Phosphinen ist aus der JAP-OS Nr. 7222088 der Mitsubishi Gas Kagaku (Anmeldetag 28.5.68, Publikationstag 21.6.1972) und aus der DE-OS Nr. 2206720 bekannt. Letztere Literaturstelle beschreibt darüber hinaus die Stabilisierung von Polycarbonaten mit Mischungen aus Phosphinen und Epoxidverbindungen.

Bekannt ist auch die Stabilisierung von Polycarbonaten mit Oxetanverbindungen (DE-OS Nr. 2658849) sowie die Stabilisierung von Polycarbonaten mit Gemischen aus Oxetanverbindungen und Phosphiten (DE-OS Nrn. 2510463 [Le A 16 231] und Nr. 2658849).

Gemäss GB-PS Nr. 1141869 sind Silane als Umesterungskatalysatoren für die Polycarbonatherstellung nach dem Schmelzumesterungsverfahren geeignet, welche zugleich stabilisierend wirken und somit die mit manchen Umesterungskatalysatoren verursachten Verfärbungen und Trübungen des hergestellten Polycarbonats nicht bewirken. Die eingesetzten Silane enthalten maximal einen Alkoxysilanrest.

Die kombinierte Stabilisierung mit organischen Siliciumverbindungen und Phosphiten und gegebenenfalls anderen Stabilisatoren wird beispielsweise in den DE-OS Nrn. 2726662, 2659756, 2741064, 2510463 [Le A 16 231] und in der US-PS Nr. 4138379 beschrieben.

In keiner der genannten Literaturstellen ist die erfindungsgemäss beanspruchte Stabilisatorkombination aus Phosphin und Oxetanverbindung bzw. Siliciumverbindung vorbeschrieben.

Die erfindungsgemässe Kombination erscheint aus folgenden Gründen nicht naheliegend:

Zwar war es — wie bereits erwähnt — bekannt, einerseits oxetangruppenhaltige Phosphite oder Mischungen aus oxetanfreien Phosphiten mit phosphorfreien Oxetanverbindungen und andererseits Mischungen aus Phosphinen mit Epoxidverbindungen als Stabilisatoren in Polycarbonat einzusetzen. Aus dem günstigen Einfluss von Oxetanverbindungen auf Phosphite konnte jedoch nicht geschlossen werden, dass Oxetanverbindungen auf die chemisch völlig anders strukturierten Phosphine, welche sich von den Phosphiten dadurch unterscheiden, dass sie keine hydrolytisch abspaltbaren Gruppen enthalten und somit

bei der Einwirkung von hydrolytischen Prozessen in Phosphorsäuren übergehen können, einen ähnlich günstigen und synergistischen Einfluss ausüben würden. Nimmt man dagegen an, dass auch bei der Umwandlung des Phosphins im Zuge der Wärmealterung des Polycarbonats saure Abbauprodukte entstehen, dann ist wiederum die gute Hydrolysebeständigkeit des erfindungsgemäss stabilisierten Polycarbonats überraschend, da bekanntlich saure Abbauprodukte die Hydrolysenstabilität des Polycarbonats vermindern.

Wie aus den weiter angeführten Beispielen hervorgeht, zeigt weder Phosphin allein noch eine Mischung aus einem aliphatischen Phosphin mit einer Oxetanverbindung, noch eine Mischung von Triphenylphosphin mit einer Epoxidverbindung eine gleichgute Wirkung wie die erfindungsgemäss beanspruchten Lösungen. Hieraus ist ersichtlich, dass die Wirkung der erfindungsgemäss beanspruchten Kombination weder aus der vorgängig bekannten Literatur noch aus der chemischen Natur der Lösungskomponenten erschlossen werden konnte bzw. vorauszusehen war.

In den Verbindungen der Formel I können die Arylreste R beispielsweise noch durch Alkylsubstituenten, Halogene oder OH substituiert sein. Die Alkylreste $R_1$ der Verbindungen der Formel I können geradkettig oder verzweigt sein. Sie können beispielsweise durch OH, Alkylcarboxy, Cyan oder Phenyl substituiert sein.

Erfindungsgemäss geeignete Phosphine der Formel I sind beispielsweise:

Triphenylphosphin, Diphenylbutylphosphin, Diphenyloctadecylphosphin, Tris-p-tolylphosphin, Tris-(p-nonylphenyl)phosphin, Trisnaphthylphosphin, Diphenyl(hydroxymethyl)-phosphin, Diphenylacetoxymethylphosphin, Diphenyl-(β-ethylcarboxyethyl)phosphin, Tris-(p-chlorphenyl)phosphin, Tris-(p-fluorphenyl)-phosphin, Diphenylbenzylphosphin, Diphenyl-β-cyanethylphosphin, Diphenyl-(p-hydroxyphenyl)phosphin, Diphenyl-1,4-dihydroxyphenyl-2-phosphin und Phenylnaphthylbenzylphosphin.

Es können sowohl einzelne Verbindungen als auch Mischungen der genannten Phosphine verwendet werden.

Erfindungsgemäss geeignete Oxetanverbindungen der Formel II sind beispielsweise:

Adipinsäurebis-3-ethyloxetanyl-3-methylester, Adipinsäurebis-3-amyloxetanyl-3-methylester, Malonsäurebis-3-amyloxetanyl-3-methylester, Azelainsäurebis-3-methyloxetanyl-3-methylester, Sebacinsäurebis-3-methyloxetanyl-3-methylester, Citronensäuretris-3-methyloxetanyl-3-methylester, Butan-1,2,3,4-tetracarbonsäuretetrakis-3-ethyloxetanyl-3-methylester, und Cyclohexan-1,2-dicarbonsäure-bis-3-ethyloxetanyl-3-methylester.

Es können sowohl einzelne Verbindungen der Formel II als auch Mischungen der genannten Verbindungen verwendet werden.

Erfindungsgemäss geeignete Oxetanverbindungen der Formel III sind beispielsweise Methyltris-(3-ethyloxetanyl-3-methoxy)silan, Dimethylbis-(3-amyloxetanyl-3-methoxy)silan, Bisethoxybis-(3-ethyloxetanyl-3-methoxy)silan, Phenyltris-(3-ethyloxetanyl-3-methoxy)silan, Benzyltris-(3-methyloxetanyl-3-methoxy)silan, (β-Butoxyethoxy)tris-(3-methyloxetanyl-β-methoxy)silan, (β-Allyloxyethoxy)tris-(3-ethyloxetanyl-3-methoxy)silan, Diallylbis-(3-amyloxetanyl-3-methoxy)silan, β-Cyanethyltris-(3-propyloxetanyl-3-methoxy)silan, β-Carboxyethyltris-(3-methyl oxetanyl-3-methoxy)-silan, β-Phenylethyltris-(3-ethyloxetanyl-3-methoxy)silan und (3-Acetoxypropyl)tris-(3-ethyloxetanyl-3-methoxy)silan.

Es können sowohl einzelne Verbindungen der Formel III als auch Mischungen der genannten Verbindungen verwendet werden.

Die aufgeführten Verbindungen der Formeln I, II und III sind literaturbekannt oder nach literaturbekannten Verfahren herstellbar.

Die erfindungsgemäss zu stabilisierenden thermoplastischen Polycarbonate sind die durch Umsetzung von Diphenolen mit Phosgen oder Diestern der Kohlensäure erhältlichen Polykondensate, wobei neben unsubstituierten Dihydroxydiarylalkanen auch solche geeignet sind, deren Arylreste in o- und/oder m-Stellung zur Hydroxylgruppe Methylgruppen oder Halogenatome tragen. Ebenso sind verzweigte Polycarbonate geeignet.

Die zu stabilisierenden Polycarbonate haben mittlere Molekulargewichte $\overline{M}w$ zwischen 10 000 und 100 000, vorzugsweise zwischen 20 000 und 40 000, ermittelt durch Messungen der relativen Viskosität in $CH_2Cl_2$ bei 25° C und einer Konzentration von 0,5 Gew.-%. Geeignete Diphenole sind z.B. Hydrochinon, Resorcin, 4,4'-Dihydroxydiphenyl, Bis(hydroxyphenyl)alkane, wie beispielsweise $C_1$ bis $C_8$-Alkylen- bzw. $C_2$ bis $C_8$-Alkylidenbisphenole, Bis(hydroxyphenyl)cycloalkane wie beispielsweise $C_5$ bis $C_{15}$-Cycloalkylen- bzw. $C_5$ bis $C_{15}$-Cycloalkylidenbisphenole, Bis(hydroxyphenyl)sulfide, -ether, -ketone, -sulfoxide oder -sulfone. Ferner α',α'-Bis(hydroxyphenyl)diisopropylbenzol sowie die entsprechenden kernalkylierten bzw. kernhalogenierten Verbindungen. Bevorzugt sind Polycarbonate auf der Basis von Bis-(4-hydroxyphenyl)propan-2,2 (Bisphenol A), Bis-(4-hydroxy-3,5-dichlorphenylpropan-2,2 (Tetrachlorbisphenol A), Bis-(4-hydroxy-3,5-dibromphenyl)propan-2,2 (Tetrabrombisphenol A), Bis-(4-hydroxy-3,5-dimethylphenyl)propan-2,2 (Tetramethylbisphenol A), Bis(4-hydroxyphenyl)cyclohexan-1,1 (Bisphenol Z) sowie auf der Basis von Dreikernbisphenolen wie α,α'-Bis-(4-hydroxyphenyl)-p-diisopropylbenzol.

Weitere für die Herstellung von Polycarbonaten geeignete Bisphenole sind in den US-PS Nrn. 3028365, 2999835, 3148172, 2970131, 2991273, 3271367 und 2999846 beschrieben.

Die Herstellung der erfindungsgemässen Stabilisatorlösungen erfolgt in bekannter Weise durch Lösen der Phosphine in den Oxetanverbindungen

in den jeweiligen Mengenverhältnissen, zweckmässigerweise unter Ausschluss von Luftsauerstoff.

Die erfindungsgemässe Stabilisierung der thermoplastischen Polycarbonate lässt sich auf beliebige Weise, vorteilhaft beispielsweise im Zuge der Herstellung des Polycarbonates durchführen und insbesondere, da es sich um bei niederer Temperatur flüssige Stabilisatoren handelt, kontinuierlich gestalten. Dabei kann die Stabilisatorlösung während der Endphase der Herstellung, in welcher das geschmolzene Polycarbonat kontinuierlich in einer Förderschnecke unter Vakuum vom Lösungsmittel befreit wird, kontinuierlich durch eine geeignete Förderpumpe eingegeben werden. Selbstverständlich ist es ausserdem möglich, das Polycarbonat auch nach der Herstellung mit der beanspruchten Lösung zu stabiliseren, z.B. durch sogenanntes Auftrudeln; diese Methode ist in den Beispielen dieser Anmeldung beschrieben und literaturbekannt.

Die einzusetzenden Stabilisatormengen betragen zwischen 0,01 und 1, vorzugsweise zwischen 0,02 und 0,5 und insbesondere zwischen 0,05 und 0,2 Gew.-%, bezogen jeweils auf Gesamtgewicht an thermoplastischem Polycarbonat und Stabilisatorlösung.

Die erfindungsgemäss stabilisierten Polycarbonate können ausserdem die bekannten Zusätze wie beispielsweise Füllstoffe, Farbstoffe, Pigmente und/oder sonstige Stabilisatoren enthalten.

Die erfindungsgemäss stabilisierten thermoplastischen Polycarbonate können auch mit anderen Thermoplasten in bekannter Weise abgemischt werden, beispielsweise mit ABS-Polymerisaten, Polystyrolen, Polyarylensulfonen oder Polyalkylenterephthalaten.

Die erfindungsgemäss stabilisierten Polycarbonate finden besonders dort Anwendung, wo die hergestellten Formkörper einer längeren hohen Wärmebelastung ausgesetzt sind und zudem für alle Gegenstände für die eine hohe Lichtdurchlässigkeit verlangt wird. Das gilt bevorzugt für die Verwendung auf dem lichttechnischen Sektor, z.B. für Lampenabdeckungen oder Verglasungen mit Polycarbonatplatten.

Die in den Beispielen genannten Teile sind Gewichtsteile.

*Herstellung eines Polycarbonats*

In einem Dreihalskolben, ausgestattet mit Rührer und Gaseinleitungsrohr, werden 454 Teile 2,2-Bis-(p-hydroxyphenyl)propan und 2,5 Teile p-tert.-Butylphenol in 1,5 l Wasser suspendiert und anschliessend der Sauerstoff aus der Reaktionsmischung entfernt, indem man unter Rühren 15 min lang Stickstoff durch die Reaktionsmischung leitet. Dann werden 355 Teile 45%iger Natronlauge und 1000 Teile Methylenchlorid zugegeben. Die Mischung wird auf 25°C abgekühlt. Unter Aufrechterhaltung dieser Temperatur durch Kühlen werden 237 Teile Phosgen während einer Zeitdauer von 120 min zugegeben. Eine zusätzliche Menge von 75 Teilen einer 45%igen Natronlauge wird nach 15 bis 30 min zugegeben bzw. nachdem die Phosgenaufnahme begonnen hat. Zu der entstandenen Lösung werden 1,6 Teile Triethylamin zugegeben und die Mischung weitere 15 min gerührt. Eine hochviskose Lösung wird erhalten, deren Viskosität durch Zugabe von Methylenchlorid reguliert wird. Die wässerige Phase wird abgetrennt. Die organische Phase wird mit Wasser salz- und alkalifrei gewaschen. Das Polycarbonat wird aus der gewaschenen Lösung isoliert und getrocknet. Das Polycarbonat hat eine relative Viskosität von 1,29 bis 1,30, gemessen in einer 0,5%igen Lösung von Methylenchlorid bei 20°C. Das entspricht ungefähr einem Molekulargewicht von 32 000. Das so gewonnene Polycarbonat wird extrudiert und granuliert.

*Herstellung stabilisierter Polycarbonate*

Das gemäss obiger Beschreibung hergestellte granulierte Polycarbonat wird mit den in der nachfolgenden Tabelle aufgeführten Mengen verschiedener Phosphite bzw. Stabilisatorlösungen durch sogenanntes Auftrudeln vermischt. Danach wird das Granulat bei 300°C in einer Mischschnecke zu einem Strang extrudiert. Dieser Strang wird wiederum zu einem Granulat zerhackt, welches in einem Spritzgussautomaten bei 330°C zu Normprüfstäben verarbeitet wird.

Folgende Stabilisatoren wurden eingesetzt:

*I. Vergleichsversuche*

A) Tris-3-ethyloxetanyl-3-methylphosphit

B) Triphenylphosphin

C) Tricyclohexylphosphin gelöst in Adipinsäurebis-3-ethyl-oxetanyl-3-methylester. Molverhältnis Phosphin zu Oxetanverbindung 1:3 entsprechend P zu Oxetangruppe 1:6 (die Lösung ist bei Zimmertemperatur fest)

D) Triphenylphosphin gelöst in Hexahydrophthalsäurebisglycidylester. Molverhältnis 1:3 entsprechend P zu Epoxidgruppe 1:6

*II. Erfindungsgemäss*

A) Triphenylphosphin gelöst in Adipinsäurebis-3-ethyloxetanyl-3-methylester. Molverhältnis zu Oxetanverbindung 1:3 entsprechend P zu Oxetangruppe 1:6.

B) Triphenylphosphin gelöst in Dimethylbis-3-ethyloxetanyl-3-methylsilan. Molverhältnis Phosphin zu Oxetanverbindung 1:3 entsprechend P zu Oxetangruppe 1:6.

Die Zusatzmenge an Stabilisator beträgt in allen Beispielen 0,1 Gew.-%, bezogen auf stabilisiertes Polycarbonat.

*Wärmealterung*

Die in der oben beschriebenen Weise hergestellten Prüfkörper wurden im Trockenschrank bei 140°C getempert. Mit Hilfe eines Spektraphotometers wurde die Lichttransmission gemessen. Der jeweilige Abfall der Lichttransmission bei 420 nm im Verlaufe der Wärmebehandlung dient als Mass für die zunehmende Verbräunung der Prüfkörper (s. Tabelle).

Lichttransmission in Prozent gemessen nach

DIN 5036 von PC-Stäben bei 420 nm in einer Schichtdicke von 4 mm

| Stabilisator | 0 | 500 h Temperung bei 140° C |
|---|---|---|
| I A | 84 | 78,5 Lichttransmission |
| I B | 84 | 76 |
| I C | 81,5 | (kein Aufhelleffekt) |
| I D | 80,5 | (kein Aufhelleffekt) |
| II A | 84 | 81 |
| II B | 83,5 | 82 |

*Hydrolysetest*

Eine Anzahl Makrolonformkörper, die mit und ohne Stabilisatoren hergestellt worden sind, mit den Abmessungen 50×6×4 mm (sogenannte Normkleinstäbe) werden in einem elektrisch beheizten Rundkolben in siedendem destillierten Wasser gelagert. Nach Ablauf bestimmter Zeitintervalle werden jeweils 10 Stäbe entnommen und daran die relative Lösungsviskosität (in $CH_2Cl$ bei 25°C und einer Konzentration von 0,5 Gew.-%) gemessen. Die erhaltenen Durchschnittswerte aus den Einzelmessungen an den 10 Stäben sind in der nachfolgenden Tabelle aufgeführt.

| Versuch | vor dem Kochen (rel. Visk.) | 500 h gekocht (rel. Visk.) | Δ |
|---|---|---|---|
| PC unstab. | 1,296 | 1,275 | 0,020 |
| I A | 1,289 | 1,126 | 0,163 |
| II A | 1,297 | 1,278 | 0,019 |

Hieraus ist ersichtlich, dass der Molekulargewichtsabbau bei der Hydrolyse des erfindungsgemäss stabilisierten Polycarbonats nicht stärker ist als beim unstabilisierten Material, und dass der Abbau deutlich geringer ist als bei einem phosphitstabilisierten Polycarbonat.

## Patentansprüche

1. Lösungen von Phosphinen der Formel (I)

$$(R)_2P-R_1 \quad (I)$$

worin

R ein unsubstituiertes oder substituiertes $C_6$ bis $C_{14}$-Aryl ist, und

$R_1$ R oder ein unsubstituiertes oder substituiertes $C_1$ bis $C_{18}$-Alkyl ist,

in Oxetanverbindungen der Formel (II)

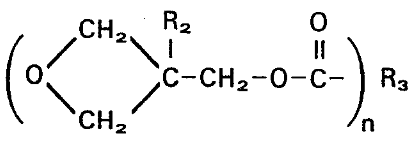 (II)

worin

$R_2$ $C_1$ bis $C_{16}$-Alkyl, und

$R_3$ entweder ein n-bindiges $C_2$ bis $C_8$-Alkan, das noch durch OH-Gruppen substituiert sein kann, wobei n eine Zahl von 1 bis 6 ist oder ein 2bindiges Cycloalkan, wobei n=2 ist, sind, oder in Oxetanverbindungen der Formel (III)

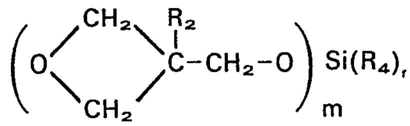 (III)

worin

$R_2$ $C_1$ bis $C_{16}$-Alkyl,

$R_4$ $C_1$ bis $C_4$-Alkyl, das gegebenenfalls durch Cyan, Carboxy oder Acetoxy substituiert sein kann, Allyl, $C_6$ bis $C_{14}$-Aryl, das gegebenenfalls alkylsubstituiert ist, $C_7$ bis $C_{14}$-Aralkyl oder $C_1$ bis $C_4$-Alkoxy, das gegebenenfalls durch $C_1$ bis $C_4$-Alkoxy oder Allyloxy substituiert sein kann, m eine ganze Zahl von 1 bis 4, und

r eine ganze Zahl von 0 bis 3, wobei m+r immer gleich 4 ist,

wobei das Mischungsverhältnis von gelöstem Phosphin der Formel (I) und oxetangruppenhaltigem Lösungsmittel der Formel (II) oder (III) zwischen 3 und 10 Oxetangruppenäquivalenten des oxetangruppenhaltigen Lösungsmittels per Atomäquivalent Phosphor des Phosphins liegt.

2. Lösungen gemäss Anspruch 1, dadurch gekennzeichnet, dass das Mischungsverhältnis zwischen 4 und 8 Oxetangruppenäquivalenten des oxetangruppenhaltigen Lösungsmittels pro Atomäquivalent Phosphor des Phosphins liegt.

3. Verwendung der Lösungen gemäss den Ansprüchen 1 und 2 zum Stabilisieren von thermoplastichen Polycarbonaten.

4. Stabilisierte, thermoplastische Polycarbonate, erhalten durch Zusatz von Stabilisatorlösung gemäss den Ansprüchen 1 und 2 in Mengen von 0,01 bis 1 Gew.-%, bezogen auf Gesamtgewicht an thermoplastischem Polycarbonat und Stabilisatorlösung.

5. Verfahren zum Stabilisieren von thermoplastischen Polycarbonaten, dadurch gekennzeichnet, dass man die Stabilisatorlösungen gemäss Anspruch 1 während oder nach der Herstellung des thermoplastischen Polycarbonats diesem in bekannter Weise hinzufügt.

## Revendications

1. Solutions de phosphines de formule (I)

$$(R)_2P-R_1 \quad (I)$$

dans laquelle

R est un groupe aryle en $C_6$-$C_{14}$ substitué ou non, et

$R_1$ est R ou un groupe alkyle en $C_1$-$C_{18}$ substitué ou non, dans des oxétannes de formule (II)

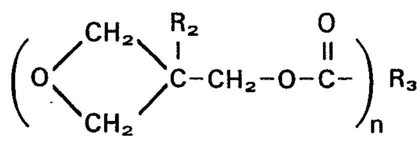 (II)

dans laquelle

$R_2$ est un groupe alkyle en $C_1$-$C_{16}$, et

$R_3$ est soit un reste d'alcane en $C_2$-$C_8$ à n liaisons, qui peut encore être substitué par des groupes OH, n étant un nombre de 1 à 6, soit un reste de cycloalcane à deux liaisons, où n est égal à 2,

ou dans des oxétannes de formule (III)

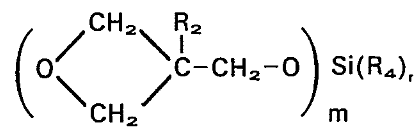 (III)

dans laquelle

$R_2$ est un groupe alkyle en $C_1$-$C_{16}$,

$R_4$ est un groupe alkyle en $C_1$-$C_4$, qui peut être éventuellement substitué par cyano, carboxy ou acétoxy, un groupe allyle, un groupe aryle en $C_6$-$C_{14}$, qui est éventuellement alkyl-substitué, un groupe arylalkyle en $C_7$-$C_{14}$ ou alcoxy en $C_1$-$C_4$, qui peut éventuellement être substitué par alcoxy en $C_1$-$C_4$ ou allyloxy, m est un nombre entier de 1 à 4 et r est un nombre entier de 0 à 3, la somme m+r étant toujours égale à 4,

le rapport de mélange de la phosphine dissoute de formule (I) et du solvant à groupes oxétannes de formule (II) ou (III) étant compris entre 3 et 10 Eq. de groupes oxétannes du solvant à groupes oxétannes par équivalent d'atome de phosphore de la phosphine.

2. Solutions selon la revendication 1, caractérisées en ce que le rapport de mélange est compris entre 4 et 8 Eq. de groupes oxétannes du solvant à groupes oxétannes par équivalent d'atome de phosphore de la phosphine.

3. Utilisation des solutions selon les revendications 1 et 2, pour la stabilisation de polycarbonates thermoplastiques.

4. Polycarbonates thermoplastiques stabilisés, obtenus par addition d'une solution de stabilisant selon les revendications 1 et 2, en quantités de 0,01 à 1% en poids par rapport au poids total du polycarbonate thermoplastique et de la solution de stabilisant.

5. Procédé pour la stabilisation de polycarbonates thermoplastiques, caractérisé en ce que l'on ajoute, de manière connue, les solutions de stabilisant selon la revendication 1 au polycarbonate thermoplastique pendant ou après sa fabrication.

## Claims

1. Solutions of phosphines of the formula (I)

$$(R)_2P-R_1 \qquad (I)$$

wherein

R is an unsubstituted or substituted $C_6$ to $C_{14}$-aryl radical, and

$R_1$ = R or is an unsubstituted or substituted $C_1$ to $C_{18}$-Alkyl radical,

in oxetane compounds of the formula (II)

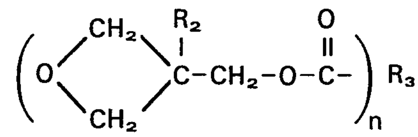 (II)

wherein

$R_2$ is $C_1$ to $C_{16}$-Alkyl, and

$R_3$ is either an n-valent radical of a $C_2$ to $C_8$-alkane, which can also be substituted by OH groups, and

n is a number from 1 to 6, or

$R_3$ is a 2-valent radical of a cycloalkane and

n is 2,

or in oxetane compounds of the formula (III)

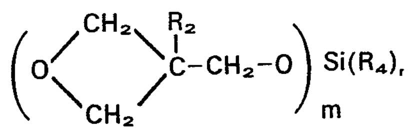 (III)

wherein

$R_2$ is $C_1$ to $C_{16}$-alkyl,

$R_4$ is $C_1$ to $C_4$-Alkyl, which can optionally be substituted by cyano, carboxyl or acetoxy, or is allyl, $C_6$ to $C_{14}$-aryl which is optionally substituted by alkyl, $C_7$ to $C_{14}$-aralkyl or $C_1$ to $C_4$-alkoxy which can optionally be substituted by $C_1$ to $C_4$-alkoxy or allyloxy,

m is an integer from 1 to 4 and r is an integer from 0 to 3, m+r always being 4, in which the mixing ratio of dissolved phosphine of the formula (I) to solvent, containing oxetane groups, of the formula (II) or (III) is between 3 and 10 oxetane group equivalents of the solvent containing oxetane groups per atom equivalent of phosphorus of the phosphine.

2. Solutions according to claim 1, characterised in that the mixing ratio is between 4 and 8 oxetane group equivalents of the solvent containing oxetane groups per atom equivalent of phosphorus of the phosphine.

3. Use of the solutions according to claims 1 and 2 for stabilizing thermoplastic polycarbonates.

4. Stabilized thermoplastic polycarbonates which have been obtained by adding a stabilizer solution according to claims 1 and 2 in amounts of 0.01 to 1% by weight, relative to the total weight of thermoplastic polycarbonate and stabilizer solution.

5. Process for stabilizing thermoplastic polycarbonates, characterised in that the stabilizer solutions according to claim 1 are added to the thermoplastic polycarbonate in a known manner, during or after its preparation.